# EUROPEAN PATENT APPLICATION

(11) **EP 2 249 222 A1**
(43) Date of publication of application: **10.11.2010**
(21) Application number: 10738295.4
(22) Date of filing: 13.01.2010
(51) Int. Cl.: G05B 19/414, B25J 9/22, G05B 19/418

(54) **ROBOT SYSTEM, ROBOT CONTROL DEVICE, AND SOFTWARE UPDATING METHOD FOR ROBOT SYSTEM**

(30) Priority: 09.02.2009 JP 2009026896
(71) Applicant: Panasonic Corporation, Kadoma-shi Osaka 571-8501 (JP)
(72) Inventor: IKEDA, Tatsuya, Osaka-shi Osaka 540-6207 (JP)
(74) Representative: Kügele, Bernhard
(86) International application number: PCT/JP2010/000121
(87) International publication number: WO 2010/089951

(57) **Abstract**

A transmission-side robot control device (21) and a receiving-side robot control device (21) each include an EPROM (27) which stores a software update program and robot motion control software, a RAM (24) which stores the software update program read from the first storage section (27), and storage media (26B) which stores update software. An external terminal or a host computer for software update is not needed, and a plurality of robot control devices can be standardized to have even an old version. It is not necessary to check a version currently stored, and the update can be performed at high speed.

## Description

### TECHNICAL FIELD

The present invention relates to a robot system which updates software stored in a robot control device and a software update method of a robot system.

### BACKGROUND ART

A software update method of a robot control device in the related art has been to replace a PROM, in which software is written, on a substrate. In recent years, however, a method of connecting an external terminal, such as a personal computer, to a robot control device through a communication cable, transmitting software from the external terminal to the control device, and overwriting software stored in the control device has been used as EPROMs (Erasable Programmable Read Only Memory), such as a flash memory in which electrical erasing/writing is possible, have come into wide use. A robot control device which connects an external terminal with a robot control device through a network line and can perform a software update for a plurality of robot control devices simultaneously with one external terminal is proposed (for example, refer to PTL 1) .

A system program with a network communication function and a memory overwriting function is started to transmit a new system program according to updating or application change from a host computer to each robot control device through a communication network. A robot control device which overwrites a system program of each robot control device with a transmitted new system program automatically by a memory overwriting function is also proposed (for example, refer to PTL 2).

A robot control device having an EPROM is connected to a plurality of robot control devices through a network line, and the software versions stored in EPROMs of the other robot control devices are checked. If it is checked that the software versions of the other robot control devices are newer than that of the robot control device, software is transmitted through the network line. Accordingly, software update is performed without a host computer or an external terminal. A robot control device software update of which has been completed transmits the software to another robot control device connected through the network line, and the robot control device which receives the software updates its own software after completing the reception. A robot control device, which completes software update of a plurality of robot control devices by repeating this such that the software update operation propagates in a sequential manner, is proposed (for example, refer to PTL 3).

However, in the software update method of the known robot control device disclosed in PTL 1 or 2, an external terminal or a host computer for transmitting software to robot control devices is required. Since the external terminal or the host computer and the robot control devices need to be connected to each other through the same communication line, the case where the external terminal needs to be moved may occur or the host computer needs to be prepared and set. When the external terminal or the host computer breaks down, the software cannot be updated.

When the production line is configured to include a plurality of robots, it is preferable that the versions of all robot control devices are the same. If the software versions are different, the operator is confused because the operating method or the display screen changes according to the version. When the loci of motions of robots are different due to different versions, it is not possible to make the robots execute the same operation by the same instruction program, and it is necessary to instruct the locus of motion, that is, an instruction program, again for every version. When there is a problem in the new-version software, there are also cases where the software is downgraded to the old version which operates stably. Also in this case, it is necessary to standardize all of the plurality of robot control devices included in the production line so as to have the old version.

On the other hand, in the known method of updating software without using a host computer which is disclosed in PTL 3, a software version is necessarily checked. When the software version is already a new version, the software update is not performed. Accordingly, software versions may not be standardized. For example, in the case where a robot control device A is a version 1.00 and a robot control device B is a version 3.00, if an update operation is executed using software with a version 2.00, the robot control device A is updated to the version 2.00 but the robot control device B maintains the version 3.00. In this case, since the versions of the two robot control devices are not equal, the operating method or the display screen changes with the version, and the operator is confused accordingly. Even if the operator wants to downgrade the version to the old version 1. 00 which operates stably since there is a problem in the new-version software, no return can be made to the old version.

In the software update method performed without a host computer which is disclosed in PTL 3, it is necessary to connect an external storage device to an external connection interface of one robot control device first and to perform a software update operation artificially. Accordingly, time for this operation becomes necessary. A robot control device software update of which has been completed transmits the software to another robot control device connected through the network line. Then, the robot control device which receives the software updates its own software after completing the reception and transmits the software to another robot control device after the software update. In this way, the software update operation propagates in a sequential manner. Accordingly, when an update operation for its own software is not completed for a certain reason, for example, when writing in an EPROM in which software is stored is not possible, transmission of software to other robot control devices is not performed. For this reason, since a plurality of robot control devices cannot be updated simultaneously, it takes time until the entire software update operation is completed. In particular, when the update operation of software of a robot control device is not completed for certain reasons in the first several sets immediately after starting the software update operation, a situation occurs in which the start of propagation of the software update operation is extremely delayed or the software update operation does not propagate.

Also when the writing time of an EPROM is longer than the software transmission and reception time, propagation of a software update operation is delayed because the writing time of the EPROM is long even if the transmission and reception of software ends within a short time. Particularly in the first several sets immediately after starting the software update operation, the start of propagation of the software update operation is extremely delayed. Speaking of the general characteristics of an EPROM, the number of times of erasing and writing in the EPROM is limited unlike a RAM in which high-speed reading/writing is possible anytime. There is even an EPROM of which the number of times of erasing and writing is as small as about 100 to 300 times. If erasing and writing are focused on a specific block, the limit of the number of times of writing may be exceeded only in the block and as a result, erasing and writing may not be possible. Since it is necessary to perform a writing operation after performing an erasing operation once for every block, the erasing and writing speed is very slow compared with the reading speed of the EPROM.

On the other hand, in a LAN network based on, for example, Ethernet (registered trademark) specifications as a communication method used for software transmission and reception, there is even a specification in which the communication speed is 1 gigabit/second. Even in a wireless LAN, there is a specification of 300 megabits/second. Generally, the erasing and writing time of the EPROM is much longer than the software transmission and reception time.

### Related art document

### Patent Literature

[PTL 1] Japanese Patent No. 3034850
[PTL 2] Japanese Patent No. 3550210
[PTL 3] Japanese Patent Unexamined Publication No. 2008-139972

### DISCLOSURE OF THE INVENTION

The present invention provides a robot system and a software update method of a robot system which does not need an external terminal or a host computer in order to update software, which can standardize a plurality of robot control devices so as to have even an old version, which does not need to check a version currently stored, and which can perform the update at high speed.

A robot system of the present invention is a robot system including: a transmission-side robot control device which transmits update software; and a receiving-side robot control device which receives the update software from the transmission-side robot control device. Each of the transmission-side robot control device and the receiving-side robot control device has a configuration including: a first storage section which stores a software update program and robot motion control software; a second storage section which stores the software update program read from the first storage section; a third storage section which stores the update software; and a communication section which transmits and receives the update software stored in the third storage section.

A robot control device of the present invention has a configuration including: a first storage section which stores a software update program and robot motion control software; a second storage section which stores the software update program read from the first storage section; a third storage section which stores the update software; and a communication section which transmits and receives the update software stored in the third storage section.

A software update method of a robot system of the present invention is a software update method of a robot system including a plurality of robot control devices each having a first storage section which stores a software update program and robot motion control software, a second storage section which stores the software update program read from the first storage section, a third storage section which stores the update software, and a communication section which transmits and receives the update software stored in the third storage section. The software update method of a robot system has a configuration including: a step of determining a transmission-side robot control device, which transmits the update software, among the plurality of robot control devices; a step of determining a receiving-side robot control device, which receives the update software transmitted from the transmission-side robot control device, among the plurality of robot control devices; a step in which the transmission-side robot control device transmits the update software, which is stored in the third storage section, to the receiving-side robot control device through the communication section; a step in which the transmission-side robot control device updates at least one of the software update program and the robot motion control software, which are stored in the first storage section, by the update software stored in the third storage section; a step in which the receiving-side robot control device receives the update software, which has been transmitted from the transmission-side robot control device, through the communication section and stores the received update software in the third storage section; and a step in which the receiving-side robot control device, which has received the update software, updates at least one of the software update program and the robot motion control software, which are stored in the first storage section, by the update software stored in the third storage section.

Through this configuration, an external terminal or a host computer for software update is not needed, and a plurality of robot control devices can be standardized to have even an old version. It is not necessary to check a version currently stored, and the update can be performed at high speed. Software update can be simultaneously performed from one transmission-side robot control device to a plurality of receiving-side robot control devices.

### BRIEF DESCRIPTION OF THE DRAWINGS

Fig. 1 is a configuration view showing a robot system in an embodiment of the present invention.
Fig. 2 is a schematic configuration view showing a robot control device of the robot system in the same embodiment.
Fig. 3 is a schematic configuration view showing the software stored in an EPROM of the robot control device in the same embodiment.
Fig. 4 is a flow chart showing an operation of a transmission-side robot control device in the same embodiment.
Fig. 5 is a flow chart showing an operation of a receiving-side robot control device in the same embodiment.

### PREFERRED EMBODIMENTS FOR CARRYING OUT THE INVENTION

Hereinafter, the present invention will be described on the basis of an embodiment using drawings.

### (Embodiment)

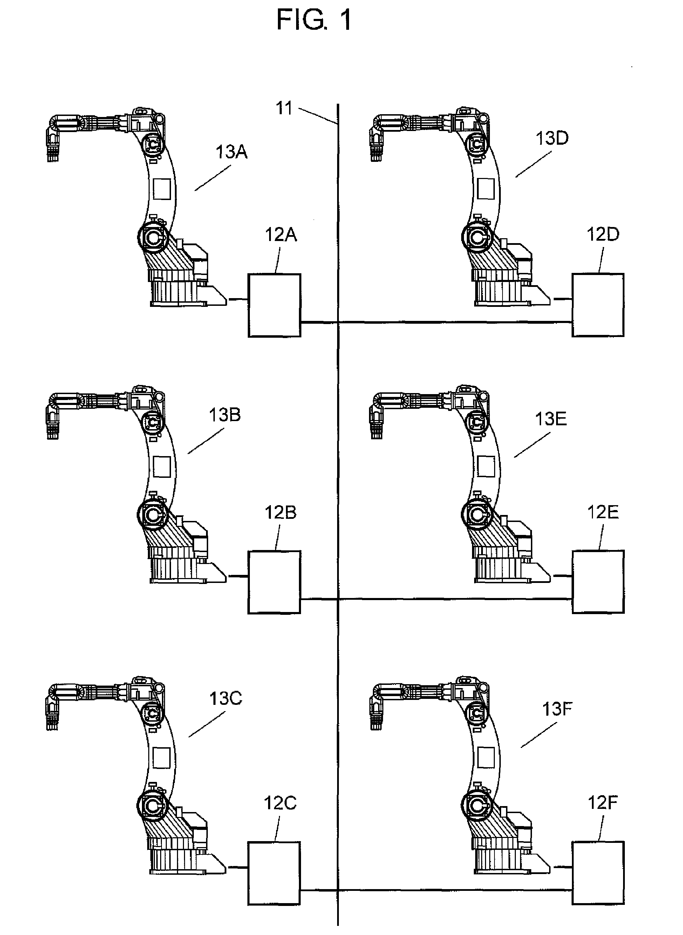

Fig. 1 is a configuration view showing a robot system in an embodiment of the present invention. In Fig. 1, plurality of robot control devices 12A to 12F are connected to each other through communication line 11. As communication line 11, a communication cable for transmitting an electric signal is generally used. However, as long as it is a structure capable of transmitting an electric signal, wireless communication or optical communication is also possible. Robot control devices 12A to 12F are connected to robots 13A to 13F, respectively. Robot control devices 12A to 12F control the operations of robots 13A to 13F, respectively.

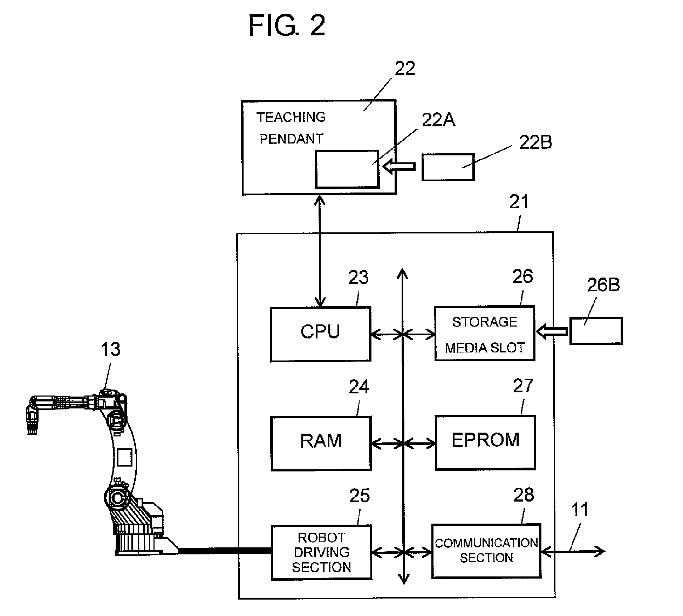

Fig. 2 is a schematic configuration view showing a robot control device of a robot system in the same embodiment. Teaching pendant 22, which is an operation panel for instruction to robots, and robot 13 (called a robot in the present embodiment although it is also called a manipulator) are connected to robot control device 21. An operator instructs the operation of robot 13 through robot control device 21 or stores the data in robot control device 21 by operating teaching pendant 22. Robot control device 21 corresponds to robot control devices 12A to 12F in Fig. 1, and robot 13 corresponds to robots 13A to 13F in Fig. 1.

CPU (Central Processing Unit) 23, which controls entire robot control device 21, and EPROM 27, which is a first storage section in which robot motion control software (hereinafter, simply referred to as software) for controlling robot 13 is stored, are provided in robot control device 21.

In EPROM 27, electrical erasing/writing is possible, a non-volatile property is given, and the reading speed by CPU 23 is a high speed. However, the erasing/writing speed is a much lower speed than the reading speed. Multitask processing is mounted in the software written in EPROM 27 so that a plurality of processing can be switched and executed, and therefore it is possible to execute processing seemingly in parallel.

RAM (Random Access Memory) 24, which is a second storage section, stores a program as instructed by the operator using teaching pendant 22 or the setting data set by the operator. In RAM 24, high-speed reading/writing by CPU 23 is possible anytime. Generally, RAM 24 itself is volatile, but the contents are held by a backup battery or the like. Alternatively, RAM 24 is formed by an element which is nonvolatile even if there is no backup battery.

Robot driving section 25 drives robot 13. It is formed as a motor driver unit (not shown) for driving a motor (not shown) in robot 13 and is driven by a command from CPU 23.

Communication section 28 performs processing for communication with communication line 11. By the command from CPU 23, data transmission to another robot control device 21 or data receiving from another robot control device 21 is performed.

A third storage section has an attachment/detachment section which detachably holds external storage media. That is, storage media 26B is detachably inserted into storage media slot 26, which is an attachment/detachment section, and is held therein. In storage media 26B held in storage media slot 26, reading/writing by CPU 23 is possible. Storage media 26B is a NAND type flash memory which is available in the market, such as an SD memory or a compact flash (registered trademark), for example. In general, the writing speed of the NAND type flash memory is much higher than the writing speed of EPROM 27.

Similarly, storage media slot 22A, which is another attachment/detachment section, is also provided in teaching pendant 22. Another storage media 22B is detachably held in storage media slot 22A. An operator inserts another storage media 22B, in which software is written, when updating the software.

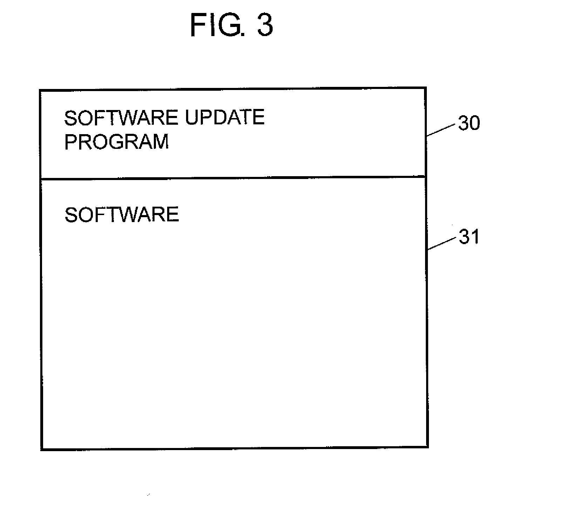

Next, the configuration of software stored in EPROM 27 will be described. Fig. 3 is a view showing the configuration of the software stored in EPROM 27. As shown in Fig. 3, software 31 is stored in EPROM 27. Software 31 is a group of programs interpreted by CPU 23 in order to make all of robot 13 and robot control device 21 operate. For example, it is so-called robot motion control software for control for calculating the locus of robot 13, motor control for driving a motor in robot 13, control for display/key input of teaching pendant 22 operated by an operator, control for writing/reading of a program or setting data instructed by the operator into RAM 24, control for the communication performed through communication section 28, control for writing/reading into storage media performed through storage media slot 26. That is, all kinds of processing required to operate the entire robot device is stored in EPROM 27 as software 31.

As shown in Fig. 3, software update program 30 is stored in EPROM 27. This software update program 30 is a program group for performing the erasing/writing of EPROM 27 itself.

In general, CPU 23 cannot perform the erasing/writing of EPROM 27 itself while reading and interpreting software update program 30 stored in EPROM 27. For this reason, when performing the erasing/writing of EPROM 27, software update program 30 is copied from EPROM 27 to RAM 24, and the CPU 23 reads copied software update program 30 into RAM 24 and interprets it while performing the erasing/writing of EPROM 27. Accordingly, the software in EPROM 27 can be updated.

Software update program 30 in EPROM 27 can also perform the erasing/writing, and software update program 30 itself can be updated.

Undoubtedly, in the case of EPROM 27 for which CPU 23 can perform erasing/writing of EPROM 27 itself while reading and interpreting software update program 30 stored in EPROM 27, the processing of copying software update program 30 to RAM 24 is not necessary. In this case, however, it is not possible to perform erasing/writing of software update program 30 itself in EPROM 27.

Next, an example will be described in which software is transmitted from a transmission-side robot control device, which is one robot control device, to receiving-side robot control devices, which are a plurality of other robot control devices in order to update software of the receiving-side robot control devices. The processing flow of a transmission-side robot control device will be first described, and the processing flow of a receiving-side robot control device will be described next.

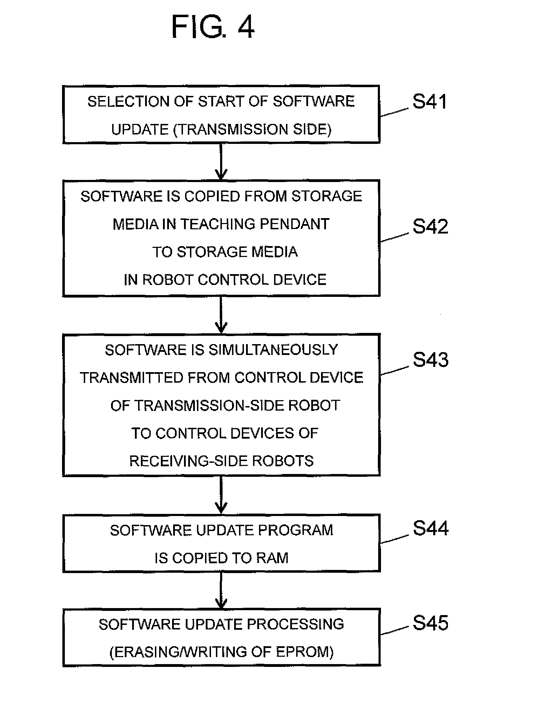

First, the processing flow of an operation of a transmission-side robot control device will be described using Fig. 4. One of plurality of robot control devices 12A to 12F shown in Fig. 1 is assumed to be a transmission-side robot control device. Which robot control device is used as a transmission-side robot control device may be arbitrarily selected by the operator trying to perform the software update operation. For example, a robot control device, which is installed at the location where the operation is easy, may be arbitrarily selected. In the present embodiment, an explanation will be given on the assumption that robot control device 12A shown in Fig. 1 is selected as transmission-side robot control device 12A and other robot control devices 12B to 12F are selected as receiving-side robot control devices 12B to 12F. In this case, both the internal configurations of transmission-side robot control device 12A and receiving-side robot control devices 12B to 12F will be described using Fig. 2 in common.

An operator inserts storage media 22B, in which update software is written, into storage media slot 22A in teaching pendant 22 connected to transmission-side robot control device 12A in advance.

Then, the operator operates "selection of start of software update (transmission side)" using teaching pendant 22 connected to transmission-side robot control device 12A (step S41). This operation is realized by operation of selecting the menu "software update (transmission side)" on the operation screen of teaching pendant 22. Alternatively, it is realized by operation of switching a key switch (not shown), which is provided in teaching pendant 22, to the "software update (transmission side)". Then, transmission-side robot control device 12A is determined. However, it may be realized by any operation as long as CPU 23 in transmission-side robot control device 12A can interpret that "software update (transmission side)" has been selected.

If the software update (transmission side) is selected in step S41, CPU 23 copies the update software in storage media 22B, which is inserted in storage media slot 22A in teaching pendant 22, to storage media 26B inserted in advance in storage media slot 26 in transmission-side robot control device 12A (step S42). By inserting storage media 26B, in which the update software is written, in advance in storage media slot 26 of transmission-side robot control device 12A, the procedure of copying the update software from storage media 22B to storage media 26B can be omitted.

Then, CPU 23 transmits the update software from transmission-side robot control device 12A to all receiving-side robot control devices 12B to 12F simultaneously (step S43). CPU 23 reads the update software from storage media 26B inserted in storage media slot 26 in transmission-side robot control device 12A and performs data transmission processing through communication section 28. Then, the data transmitted from transmission-side robot control device 12A is transmitted to receiving-side robot control devices 12B to 12F through communication line 11.

The data transmission is executed by multitask processing. By this multitask processing, CPU 23 can transmit the software in parallel to plurality of receiving-side robot control devices 12B to 12F. Therefore, plurality of receiving-side robot control devices 12B to 12F can simultaneously receive the update software transmitted from transmission-side robot control device 12A.

Specifically, when transmission-side robot control device 12A has transmitted a transmission packet to one receiving-side robot control device 12B, receiving-side robot control device 12B stores the received packet in storage media 26B in receiving-side robot control device 12B. While receiving-side robot control device 12B stores the received packet in storage media 26B in receiving-side robot control device 12B, transmission-side robot control device 12A waits for the transmission to receiving-side robot control device 12B. While it is in the standby state, a packet can be transmitted to other receiving-side robot control devices 12C to 12F. The packet is a group of divided data in the packet communication in which the large-capacity data is transmitted or received in a state divided into small units when being transmitted or received. By performing transmission or reception using a group of divided data, a network load and a load at the receiving side can be reduced.

Thus, by multitask processing, transmission-side robot control device 12A can transmit the update software to plurality of receiving-side robot control devices 12B to 12F without wasting time. That is, software transmission can be performed efficiently. Accordingly, it is possible to transmit the software seemingly in parallel to plurality of receiving-side robot control devices 12B to 12F.

After the transmission of the update software from transmission-side robot control device 12A to all receiving-side robot control devices 12B to 12F is completed, transmission-side robot control device 12A copies software update program 30, which is stored in EPROM 27, to RAM 24 in order to execute the erasing/writing of EPROM 27 (step S44). As described above, this is because, in general, CPU 23 cannot perform the erasing/writing of EPROM 27 itself while reading and interpreting software update program 30 stored in EPROM 27.

Then, software update processing is performed (step S45). CPU 23 reads and interprets software update program 30 copied on RAM 24 and executes erasing of EPROM 27. Then, CPU 23 reads the update software copied to storage media 26B in transmission-side robot control device 12A and writes it into EPROM 27. Thus, CPU 23 completes the erasing/writing of EPROM 27 by copying software update program 30 to RAM 24 and then reading and interpreting software update program 30, which has been copied on RAM 24 and executing it.

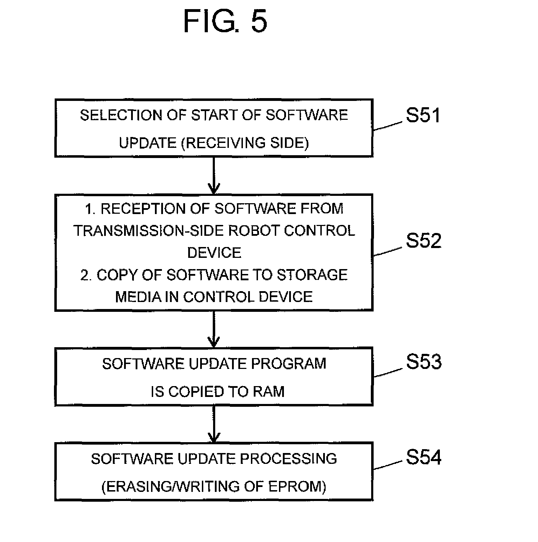

Then, the processing flow of operation of a receiving-side robot control device will be described using Fig. 5. One of plurality of robot control devices 12A to 12F in Fig. 1 is set as a transmission-side robot control device, and all the other robot control devices are set as receiving-side robot control devices. In the present embodiment, as described above, since transmission-side robot control device 12A is selected as a transmission side, receiving-side robot control devices 12B to 12F become receiving sides. In the present embodiment, all those other than transmission-side robot control device 12A are used as receiving-side robot control devices 12B to 12F. However, an arbitrary robot control device other than transmission-side robot control device 12A may be set as a receiving side.

The operator operates "selection of start of software update (receiving side)" using teaching pendant 22 connected to receiving-side robot control devices 12B to 12F (step S51). This operation is realized by operation of selecting the menu "software update (receiving side)" on the operation screen of teaching pendant 22. Alternatively, it is realized by operation of switching a key switch (not shown), which is provided in teaching pendant 22, to the "software update (receiving side)". However, it may be realized by any operation as long as CPU 23 in each of receiving-side robot control devices 12B to 12F can interpret that "software update (receiving side)" has been selected. Alternatively, an operation is also possible in which a request of "software update (receiving side) " is given from transmission-side robot control device 12A to receiving-side robot control devices 12B to 12F through communication line 11 and robot control devices 12B to 12F, which have received this request, become receiving-side robot control devices 12B to 12F. By such operations, receiving-side robot control devices 12B to 12F are determined.

If "software update (receiving side) " is selected in step S51, receiving-side robot control devices 12B to 12F wait to receive the update software transmitted from transmission-side robot control device 12A.

Then, CPU 23 in each of receiving-side robot control devices 12B to 12F performs processing for receiving the update software transmitted from transmission-side robot control device 12A and copies the update software to storage media 26B in receiving-side robot control devices 12B to 12F (step S52). After receiving-side robot control devices 12B to 12F completely receive a first transmission packet from transmission-side robot control device 12A, the first transmission packet is copied to storage media 26B in receiving-side robot control devices 12B to 12F. When the copy to storage media 26B is completed, the next transmission packet can be received. When the reception of all packets from transmission-side robot control device 12A is completed and the reception of the update software is completed accordingly, software update program 30 is copied to RAM 24 (step S53).

Then, software update processing is performed (step S54). First, CPU 23 reads and interprets software update program 30 copied on RAM 24 and erases the contents stored in EPROM 27. Then, CPU 23 reads the update software copied to storage media 26B in each of receiving-side robot control devices 12B to 12F and writes it into EPROM 27. Thus, software of EPROM 27 is updated by executing software update program 30 in RAM 24 after storing software update program 30 in RAM 24.

Since receiving-side robot control devices 12B to 12F start the software update processing automatically when the reception of the update software is completed, transmission-side robot control device 12A may perform only the transmission of update software to receiving-side robot control devices 12B to 12F for all receiving-side robot control devices 12B to 12F.

Generally, the time required for the transmission of update software is much shorter than the time for erasing and writing to EPROM 27. Accordingly, transmission of the update software to all receiving-side robot control devices 12B to 12F is completed almost simultaneously. That is, since the software update of all receiving-side robot control devices 12B to 12F is completed almost simultaneously, software of all robot control devices 12A to 12F can be updated in a short time.

As described above, according to the present embodiment, software of plurality of robot control devices 12A to 12F can be simultaneously updated in a short time without an external terminal or a host computer.

Software versions of transmission-side robot control device 12A and receiving-side robot control devices 12B to 12F are not checked. Accordingly, it is possible to standardize the software versions of all robot control devices 12A to 12F to the same version regardless of whether it is a new version or an old version. Therefore, operator's operability or robot motion can be standardized.

Detachable and nonvolatile storage media 26B, in which software is written in advance, is inserted into storage media slot 26 in transmission-side robot control device 12A, and transmission-side robot control device 12A transmits the update software in storage media 26B simultaneously to all receiving-side robot control devices 12B to 12F. Accordingly, it is not necessary to connect an external storage device to the first one robot control device artificially in order to perform the software update operation, unlike the related art. That is, software of plurality of receiving-side robot control devices 12B to 12F can be simultaneously updated simply by inserting storage media 26B, in which software is written, into transmission-side robot control device 12A.

Receiving-side robot control devices 12B to 12F store the received update software in detachable and nonvolatile storage media 26B in receiving-side robot control devices 12B to 12F, and then the update software stored in storage media 26B is written into EPROM 27. In this way, the received update software can be buffered in storage media 26B. Accordingly, even if the writing into EPROM 27 is interrupted for certain reasons, it can be restored by performing the update operation again from storage media 26B. Even when software in a robot control device under operation in the production line was destroyed for certain reasons, it can be restored by performing the update operation again from storage media 26B.

The writing of update software into detachable and nonvolatile storage media 26B in transmission-side robot control device 12A is performed by transmitting the update software from detachable and nonvolatile storage media 22B in teaching pendant 22 of transmission-side robot control device 12A. For example, even when a robot control device is stored in a location which cannot be easily accessed, such as the second floor in a factory or an attic space, software of plurality of receiving-side robot control devices 12B to 12F can be simultaneously updated by inserting storage media 22B, in which update software is written, into teaching pendant 22 connected to transmission-side robot control device 12A and transmitting the update software from teaching pendant 22 to storage media 26B in transmission-side robot control device 12A.

In the present embodiment, transmission-side robot control device 12A and plurality of receiving-side robot control devices 12B to 12F are disposed in a predetermined region and are connected to each other without a public line. The predetermined region is the inside of a factory or one facility line of a factory, for example.

### INDUSTRIAL APPLICABILITY

The present invention does not need to use an external terminal or a host computer in order to update software in a robot control device, and can update software of a plurality of other robot control devices simultaneously by one robot control device. Accordingly, it is useful as a robot system which updates the software of a plurality of robot control devices set in a predetermined region.

### DESCRIPTION OF REFERENCE NUMERALS AND SIGNS

- 11:: communication line
- 12A to 12F, 21:: robot control device
- 13, 13A to 13F:: robot
- 22:: teaching pendant
- 22A, 26:: storage media slot
- 22B, 26B:: storage media
- 23:: CPU
- 24:: RAM
- 25:: robot driving section;
- 27:: EPROM
- 28:: communication section
- 30:: software update program
- 31:: software

## Claims

1. A robot system comprising:
a transmission-side robot control device which transmits update software; and
a receiving-side robot control device which receives the update software from the transmission-side robot control device,
wherein each of the transmission-side robot control device and the receiving-side robot control device includes:
a first storage section which stores a software update program and robot motion control software;
a second storage section which stores the software update program read from the first storage section;
a third storage section which stores the update software; and
a communication section which transmits and receives the update software stored in the third storage section.

2. The robot system of Claim 1,
wherein the third storage section has an attachment/detachment section which detachably holds an external storage medium, and stores the update software in the external storage medium.

3. The robot system of Claim 1,
wherein the update software is transmitted to the third storage section of the transmission-side robot control device from an operation panel for instruction to robots.

4. The robot system of Claim 3,
wherein the operation panel for instruction to robots has another attachment/detachment section which detachably holds another external storage medium, and the update software is stored in another external storage medium.

5. The robot system of Claim 1,
wherein when updating at least one of the software update program and the robot motion control software, which are stored in the first storage section of the receiving-side robot control device, by the update software stored in the third storage section of the transmission-side robot control device, at least one of the software update program and the robot motion control software stored in the first storage section of the receiving-side robot control device is updated without checking a version of the software update program or the robot motion control software stored in the first storage section of the receiving-side robot control device.

6. The robot system of Claim 1,
wherein the update software stored in the third storage section of the transmission-side robot control device is transmitted from the communication section of the transmission-side robot control device to the communication section of the receiving-side robot control device and stored in the third storage section of the receiving-side robot control device.

7. The robot system of Claim 1,
wherein one set of the transmission-side robot control device and a plurality of sets of the receiving-side robot control device are provided.

8. A robot control device comprising:
a first storage section which stores a software update program and robot motion control software;
a second storage section which stores the software update program read from the first storage section;
a third storage section which stores the update software;
and
a communication section which transmits and receives the update software stored in the third storage section.

9. The robot control device of Claim 8,
wherein the third storage section has an attachment/detachment section which detachably holds an external storage medium, and stores the update software in the external storage medium.

10. The robot control device of Claim 8,
wherein the update software is transmitted to the third storage section from an operation panel for instruction to robots.

11. The robot control device of Claim 10,
wherein the operation panel for instruction to robots has another attachment/detachment section which detachably holds another external storage medium, and the update software is stored in another external storage medium.

12. A software update method of a robot system including a plurality of robot control devices each having a first storage section which stores a software update program and robot motion control software, a second storage section which stores the software update program read from the first storage section, a third storage section which stores the update software, and a communication section which transmits and receives the update software stored in the third storage section, the software update method of a robot system comprising:
a step of determining a transmission-side robot control device, which transmits the update software, among the plurality of robot control devices;
a step of determining a receiving-side robot control device, which receives the update software transmitted from the transmission-side robot control device, among the plurality of robot control devices;
a step in which the transmission-side robot control device transmits the update software, which is stored in the third storage section, to the receiving-side robot control device through the communication section;
a step in which the transmission-side robot control device updates at least one of the software update program and the robot motion control software, which are stored in the first storage section, by the update software stored in the third storage section;
a step in which the receiving-side robot control device receives the update software, which has been transmitted from the transmission-side robot control device, through the communication section and stores the received update software in the third storage section; and
a step in which the receiving-side robot control device, which has received the update software, updates at least one of the software update program and the robot motion control software, which are stored in the first storage section, by the update software stored in the third storage section.

13. The software update method of a robot system of Claim 12,
wherein the third storage section has an attachment/detachment section which detachably holds an external storage medium, and stores the update software in the external storage medium.

14. The software update method of a robot system of Claim 12, further comprising:
a step in which the transmission-side robot control device transmits the update software from an operation panel for instruction to robots to the third storage section.

15. The software update method of a robot system of Claim 12,
wherein the operation panel for instruction to robots has another attachment/detachment section which detachably holds another external storage medium, and the update software is stored in another external storage medium.

## Amended claims

### Amended claims under Art. 19.1 PCT

1. (Amended) A robot system comprising:
a transmission-side robot control device which transmits update software; and
a receiving-side robot control device which receives the update software from the transmission-side robot control device,
wherein each of the transmission-side robot control device and the receiving-side robot control device includes:
a first storage section which stores a software update program and robot motion control software;
a second storage section which stores the software update program read from the first storage section;
a third storage section which stores the update software; and
a communication section which transmits and receives the update software stored in the third storage section,
wherein the transmission-side robot control device performs data transmission by multitask processing.

2. The robot system of Claim 1,
wherein the third storage section has an attachment/detachment section which detachably holds an external storage medium, and stores the update software on the external storage medium.

3. The robot system of Claim 1,
wherein the update software is transmitted to the third storage section of the transmission-side robot control device from an operation panel for instruction to robots.

4. The robot system of Claim 3,
wherein the operation panel for instruction to robots has another attachment/detachment section which detachably holds another external storage medium, and the update software is stored on another external storage medium.

5. The robot system of Claim 1,
wherein when updating at least one of the software update program and the robot motion control software, which are stored in the first storage section of the receiving-side robot control device, by the update software stored in the third storage section of the transmission-side robot control device, at least one of the software update program and the robot motion control software stored in the first storage section of the receiving-side robot control device is updated without checking the version of the software update program or the robot motion control software stored in the first storage section of the receiving-side robot control device.

6. The robot system of Claim 1,
wherein the update software stored in the third storage section of the transmission-side robot control device is transmitted from the communication section of the transmission-side robot control device to the communication section of the receiving-side robot control device and stored in the third storage section of the receiving-side robot control device.

7. The robot system of Claim 1,
wherein one set of the transmission-side robot control device and a plurality of sets of the receiving-side robot control device are provided.

8. (Amended) A robot control device comprising:
a first storage section which stores a software update program and robot motion control software;
a second storage section which stores the software update program read from the first storage section;
a third storage section which stores the update software; and
a communication section which transmits and receives the update software stored in the third storage section,
wherein the transmission-side robot control device performs data transmission by multitask processing.

9. The robot control device of Claim 8,
wherein the third storage section has an attachment/detachment section which detachably holds an external storage medium, and stores the update software on the external storage medium.

10. The robot control device of Claim 8,
wherein the update software is transmitted to the third storage section from an operation panel for instruction to robots.

11. The robot control device of Claim 10,
wherein the operation panel for instruction to robots has another attachment/detachment section which detachably holds another external storage medium, and the update software is stored on another external storage medium.

12. (Amended) A software update method of a robot system including a plurality of robot control devices each having a first storage section which stores a software update program and robot motion control software, a second storage section which stores the software update program read from the first storage section, a third storage section which stores the update software, and a communication section which transmits and receives the update software stored in the third storage section, the software update method of a robot system comprising:
a step of determining a transmission-side robot control device, which transmits the update software, among the plurality of robot control devices;
a step of determining a receiving-side robot control device, which receives the update software transmitted from the transmission-side robot control device, among the plurality of robot control devices;
a step in which the transmission-side robot control device transmits the update software, which is stored in the third storage section, to the receiving-side robot control device through the communication section;
a step in which the transmission-side robot control device updates at least one of the software update program and the robot motion control software, which are stored in the first storage section, by the update software stored in the third storage section;
a step in which the receiving-side robot control device receives the update software, which has been transmitted from the transmission-side robot control device, through the communication section and stores the received update software in the third storage section; and
a step in which the receiving-side robot control device, which has received the update software, updates at least one of the software update program and the robot motion control software, which are stored in the first storage section, by the update software stored in the third storage section,
wherein the transmission-side robot control device performs data transmission by multitask processing.

13. The software update method of a robot system of Claim 12,
wherein the third storage section has an attachment/detachment section which detachably holds an external storage medium, and stores the update software on the external storage medium.

14. The software update method of a robot system of Claim 12, further comprising:
a step in which the transmission-side robot control device transmits the update software from an operation panel for instruction to robots to the third storage section.

15. The software update method of a robot system of Claim 12,
wherein the operation panel for instruction to robots has another attachment/detachment section which detachably holds another external storage medium, and the update software is stored on another external storage medium.
